(19) Europäisches Patentamt
European Patent Office
Office européen des brevets

(11) **EP 3 148 291 B1**

(12) **EUROPEAN PATENT SPECIFICATION**

(45) Date of publication and mention
of the grant of the patent:
**18.07.2018 Bulletin 2018/29**

(51) Int Cl.:
**H05B 1/02** *(2006.01)*     **A47J 27/10** *(2006.01)*
**A47J 27/16** *(2006.01)*

(21) Application number: **16194331.1**

(22) Date of filing: **16.05.2014**

(54) **METHOD OF CONDUCTING A LIQUID-BASED COOKING PROCESS, CONTROLLER AND COOKING HOB ASSEMBLY**

**VERFAHREN ZUR DURCHFÜHRUNG EINES FLÜSSIGKEITSBASIERTEN KOCHVERFAHRENS, STEUERGERÄT UND HERDPLATTENANORDNUNG**

**PROCÉDÉ DE CONDUITE D'UN PROCESSUS DE CUISSON À BASE DE LIQUIDE, CONTRÔLEUR ET ENSEMBLE DE PLAQUE DE CUISSON**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.03.2017 Bulletin 2017/13**

(62) Document number(s) of the earlier application(s) in accordance with Art. 76 EPC:
**14168590.9 / 2 945 460**

(73) Proprietor: **Electrolux Appliances Aktiebolag**
**105 45 Stockholm (SE)**

(72) Inventors:
• **PUCHINGER, Bianca**
  **91541 Rothenburg ob der Tauber (DE)**
• **BURKHARDT, Jennifer**
  **91541 Rothenburg ob der Tauber (DE)**
• **HERZOG, Michael**
  **91541 Rothenburg ob der Tauber (DE)**
• **BODECHTEL, Vera**
  **91541 Rothenburg ob der Tauber (DE)**
• **ENZENMÜLLER, Sabrina**
  **91541 Rothenburg ob der Tauber (DE)**
• **KÄLLBERG, Per**
  **105 45 Stockholm (SE)**

(74) Representative: **Electrolux Group Patents**
**AB Electrolux**
**Group Patents**
**105 45 Stockholm (SE)**

(56) References cited:
**EP-A1- 2 327 939     DE-A1- 3 323 399**
**DE-A1- 3 535 434     DE-A1- 10 353 299**
**DE-A1-102010 036 988**

**Description**

The present invention is directed to a method of conducting a liquid-based cooking process, in particular Sous Vide cooking process, a respective controller and a cooking hob assembly. Liquid-based cooking processes are well known in the art and relate for example to cooking food in boiling or simmering water. Water represents a common cooking or boiling liquid or medium for thoroughly cooking food. However, liquid-based or water-based cooking still leaves room for improvements, in particular with respect to automation and cooking efficiency. Documents DE 33 23 399 A1, DE 35 35 434 A1, EP 2 327 939 A1, DE 103 53 299 A1 and DE 10 2010 036 988 A1 disclose cooking methods and cooking hobs according to the state of the art. Therefore it is an object of the present invention to provide an improved and simplified method of conducting a liquid-based, in particular water-based, cooking processes. In particular a respective method shall be provided that allows to efficiently boil, simmer, or deep-fry food products in adequate cooking vessels. Further, a respective cooking hob and controller for controlling a cooking hob assembly shall be provided.

This object is solved by claims 1, 11 and 13. Embodiments and variants in particular result from the dependent claims. According to claim 1, a method of conducting a liquid-based cooking process, which may be an ordinary cooking process or a Sous Vide type cooking process, or a combination thereof, for a cooking hob assembly comprising at least one heating element for heating a cooking vessel placed thereon is proposed. The cooking process in particular may comprise a boiling process, simmering process, poaching process or deep-fry process for food placed in the cooking vessel placed on the heating element. As a liquid for the liquid-based cooking, water, milk, oil, and other liquids may be used.

As already mentioned, the method may be related to a Sous Vide cooking procedure in which vacuumed food placed into the liquid is cooked by adequately heating the liquid, for example at comparatively moderate temperatures, in particular in the range of about 50°C to 70°C, or 55°C to 60°C.

The cooking hob assembly comprises a cooking zone or hob with a heating element, a controller, i.e. a control unit, and a temperature sensor. The controller as such may be configured and adapted to conduct a semi-automatic or even automatic liquid-based cooking process or program as will be described in more detail below.

It shall be mentioned, that the term "cooking" and related word family herein is used as a type of generic term, in particular comprising cooking, boiling, simmering, poaching, deep-frying and similar processes for treating and/or preparing food.

Therefore, the term liquid-based cooking shall in particular mean a cooking process in which food products and/or the liquid itself are boiled, cooked, simmered, poached and/or deep-fried, in particular in oil or water or milk. Examples for such cooking processes are the preparation of rice, potatoes, pasta and the like.

In accordance with the embodiment of the invention according to claim 1, a method may comprise the following steps carried out by the controller:

- measuring a liquid temperature of liquid inside the cooking vessel placed on the heating element of the cooking zone via the temperature sensor which is at least partly immersed in the liquid;
- controlling the liquid temperature of the liquid in accordance with a pre-set temperature profile over time by adequately powering the heating element on which the cooking vessel is placed in dependency of the measured liquid temperature;
- powering as an initial operational heat-up phase the heating element with a pre-set heat-up power level in an open or closed loop control so as to heat up the liquid to a pre-set temperature;
- determining in the initial or an intermediate operational phase an amount of liquid contained in the cooking vessel and using the amount of liquid thus determined in at least one subsequent operational phase as one of the parameters for calculating and setting the heating power level of the heating element;
- entering after the heat-up phase a wait-for-load phase, in which load changes occurring within the cooking vessel are monitored and detected by the controller;
- upon detecting a load change and/or upon user confirmation, automatically transferring, by the controller, the cooking hob assembly into a react-to-load-phase, and,
- by the controller, operating the heating element so as to re-establish the cooking temperature prior to the load change;
- subsequently to the react-to-load phase, by the controller, transferring the cooking hob assembly to a keep-simmering phase and, by controller, powering the heating element so as to track a pre-set cooking profile.

In conducting the method, the controller may, for example constantly, measure the liquid temperature of liquid present in a cooking vessel placed on the heating element of the cooking zone or hob. The temperature sensor used for measuring the liquid temperature may be placed at least partially inside the cooking vessel, and, for example a sensor tip, may at least partly be immersed in the liquid, e.g. water. The sensor tip in particular may be immersed to such an extent that the temperature of the liquid can be determined with adequate accuracy.

The controller and temperature sensor may be coupled to each other for exchange of electronic data, such that at least a transfer of sensor data from the temperature sensor to the controller is possible, and that the controller can use respective data for controlling the heating element. However, the possibility of transfer of other type of information and/or bidirectional communication may also be implemented.

The controller is adapted to use, when carrying out the method, the liquid temperature, e.g. water temperature, as a control variable for controlling liquid-based cooking, comprising but not limited to cooking, boiling, deep frying, simmering, poaching, in particular for controlling Sous Vide cooking procedures.

In particular, it may be provided that the controller directly controls, either in a closed or in an open loop control, the liquid temperature in accordance with a pre-set temperature profile. The temperature profile may be a pre-set temperature variation over time, and in particular may include time intervals comprising or consisting of constant temperature values. This in particular shall mean that the temperature control may be adapted such that the heating element may be powered in accordance with a pre-set or pre-defined temperature profile, which may vary over time, or be essentially constant.

The temperature profile may be a pre-set or pre-defined time course of temperature values or levels and related time durations for which a specific temperature level shall be maintained. The temperature profile may for example be fixed by parameter values in a pre-set cooking program.

The controller may be adapted to control the liquid temperature by adequately powering the heating element, i.e. by adequately setting the power levels of the heating element, wherein the setting of the power level may be done in dependence of the temperature value measured by the temperature sensor.

The power levels required for obtaining the required temperature settings may be calculated by the controller from one or more operational and/or process variables or parameters related to the cooking process. As a main variable, the temperature value measured by the temperature sensor may be used.

For controlling the heating element, the controller may be connected to the heating element such that the heating level or heating power of the heating element can be changed directly by the controller.

With the proposed method it may be provided that the controller, which may operate in accordance with an open or closed loop control, may implement or carry out different optional operational phases. In one operational phase which may belong to an initial operational phase, the controller may power the heating element, in particular in a first or primary operational phase, with a pre-set, in particular elevated, heat-up power level so as to heat up, in particular rapidly heat up, the liquid, in particular water, oil and/or milk, to a pre-set, in particular preliminary, temperature, in particular target temperature.

For heating up the liquid in such an optional operational phase the maximal power level of the heating element may be used or set. In cases where the amount of liquid, which may be determined in a separate process step as described further below, lies below a given threshold, e.g. 0.5 l, a reduced power level may be applied, or heat up may be cancelled. The reduction in the power level may be related to the difference of the liquid level relative to the threshold value.

As a result, the heat-up phase described above, a pre-set, in particular initial, target temperature value for the liquid contained within the cooking vessel may be obtained.

An end condition for the heating-up phase may be defined by obtaining a desired target temperature within the temperature profile, or by a defined timeout. In particular, a respective target temperature level may be the basis for subsequent cooking and process steps.

A timeout may be a condition in which the heating element is deactivated to limit the overall time duration of or cut-off an initial heat-up phase, in particular avoiding overheating and/or deterioration of the cooking vessel or food placed in the cooking vessel. In particular in case that all or essentially all the liquid initially contained in the cooking vessel should, for whichever reason, have been vaporized, the controller may deactivate the heating element.

The timeout duration, after which the first phase, and probably the whole cooking procedure, may be automatically stopped, may be determined or calculated from the amount of liquid determined by the controller, and other operational parameters.

With the proposed method, the controller is adapted to power the heating element in such a way that a pre-set liquid temperature profile of the liquid present in the cooking vessel placed on the heating element over time may be obtained. The control of the liquid temperature in particular may be based on temperature values measured by the temperature sensor at least partially immersed in the liquid contained in the cooking vessel.

For obtaining the desired liquid temperature profile over time, which in particular may comprise conducting a cooking, in particular boiling, poaching, simmering and/or deep-frying, process, the controller may activate and deactivate the heating element with respective power settings. The power settings in particular may be such that the control variable represented by the liquid temperature measured and/or monitored by the temperature sensor at least partially immersed in the liquid in combination with the controller, trails the pre-set temperature levels over time. As an example, the heating element may be powered so as to keep water boiling, simmering and the like, for example in such a degree adequate for cooking food such as pasta, rice, vegetables, potatoes, milk, pudding and similar, and also adequate for reheating and simmering food, in particular up to or at temperatures of about 70 degrees. For Sous Vide cooking, temperatures in the range between 50°C to 70°C may be preferable.

According to the invention, the controller may in one optional operational phase determine, calculate or estimate an amount of liquid contained in the cooking vessel and to use the amount of liquid thus determined in one of subsequent operational phases as one of the parameters for calculating or setting the heating power level of the heating element. The determination of the amount of liquid contained in the cooking vessel may be an initial step and/or may be conducted as an intermediate step within a cooking program.

The proposed method, in particular by using a temperature sensor directly immersed, at least partially, in the liquid inside the vessel placed on a heating element of a cooking zone or hob allows improved and simplified cooking, in particular Sous Vide type cooking. An automatic calculation or estimation of the amount of liquid, in particular water, contained within the cooking vessel, simplifies cooking and allows improved cooking results. Beyond that using the amount of liquid in controlling cooking procedures may result in more efficient liquid-based cooking, boiling, simmering, poaching and/or deep-frying, and cooking and the like at least can be, as compared to known solutions, greatly enhanced.

In embodiments or variants of the method the controller may be adapted to estimate or calculate the amount of liquid contained in the cooking vessel from an actual power level of the heating element, the liquid temperature measured by the temperature sensor, a rate of change of the liquid temperature, and/or time.

The estimation of the amount of liquid, in particular water, may for example be conducted as follows:
The calculation may be active in an initial phase and may work with liquid temperatures of up to 70 °C. This in particular may avoid wrong calculation values.

The calculation may start when there are read out more than a predetermined number, such as for example seven, measured temperature values after beginning of a chosen cooking program, in particular in an initial phase heating up the liquid inside the vessel.

At this moment the current temperature, for example measured by a surface acoustic wave (SAW) temperature sensor, may be saved as starting temperature.

An applied energy may be calculated with the sum of the power multiplied with the measurement rate. Here, a measurement of 0.2 Hz may be used, for example.

A delta temperature or temperature difference may be calculated according to the following formula:

$$DeltaTemperature = sensor\ temperature - starting\ temperature$$

The amount of liquid, in particular water, [in ml] may be calculated based on the energy [in J], the temperature difference [in K] and a modified specific heat capacity.

The amount of liquid, in particular water, may be calculated every cycle, e.g. in an initial phase, until the sensor-temperature reaches or is higher than a threshold, preferably at 80 C. This 80°C threshold value may be used, because the temperature curve in regions higher than 80 °C may approach saturation. In particular near or at the boiling point. In reaching the respective threshold value, the value of amount of liquid, in particular water, determined is saved and may be used as a control parameter in subsequent phases.

The estimation of the amount of liquid, such as water, in particular is possible in an initial, in particular heat-up, phase, and may be started only with liquid temperatures lower than 70 °C. The calculation may be continued until a threshold liquid temperature, e.g. a threshold of 80 °C, is reached, and then, the value of amount of liquid may be saved.

The value for the amount of liquid may be used as a parameter for adjusting cooking, in particular for instance for:

- in an initial phase,for the calculation of the time out of actual or subsequent cooking phases;
- setting the heating power level of the heating element;
- the calculation of the power needed in actual and/or subsequent cooking phases;
- ensuring that a minimum amount of liquid, for example milk, required for proper execution of a cooking program or phase is present.

In an embodiment according to claim 1,, the method comprises, preferably after a preceding heat-up phase, a wait-for-load phase in which the controller monitors or is adapted to detect load changes occurring within the cooking vessel.

A load change in particular may result from a sudden change in the amount of liquid or food contained in the cooking vessel. In particular a load change may result from adding or removing food and/or liquid to or from the cooking vessel. Note that a load change shall not comprise reductions of the amount of liquid due to vaporization during cooking. A load change may also or in the alternative be detected by a sudden temperature change of the liquid contained in the cooking vessel.

The load changes, in particular for automatically starting of the react to load-phase, may be detected only by decreasing or decreased temperature - below a defined temperature level. It shall, however, be also possible to switch to the react to load-phase by pressing a button, by the user for example.

During normal liquid-based cooking, food is added to the cooking vessel as soon as the liquid inside the vessel reaches a certain temperature, e.g. boils or starts to boil. Therefore, the wait-for-load phase may follow immediately after a heat-up phase.

In the wait-for-load phase, the temperature level of the liquid inside the vessel may be kept at the pre-set temperature or condition, e.g. boiling, by adequately setting the power level of the heating element. This setting of the heating element may be conducted by the controller.

The power level of the heating element in the wait-for-load phase may be calculated by the controller and may lie between a pre-set lower level, such as 1200W, and the maximum power used in an initial or preceding heat-up phase.

In most cases, food that is to be added to the cooking vessel has a temperature far below that of the liquid, in particular water, inside the vessel. Therefore the temperature within the vessel upon addition of the food at least temporarily will drop, and in general has to be brought to an elevated temperature again.

Therefore, in case that in the present embodiment and variant the controller determines or senses a load change it will transfer the heating element into a react-to-load phase in which the controller operates the heating element so as to establish or re-establish the target cooking level, in particular related to cooking, boiling, poaching, simmering and/or deep-frying . In particular, a cooking level prevailing prior to the load change can be re-established.

In most cooking situations, the liquid temperature will drop in case that food intended for cooking is added. Hence, in the react to load phase, the controller may determine or calculate a new heating or power level for the heating element that is suitable and adequate to establish the required or target cooking level, in particular in adequate time intervals.

The new heating, power or cooking level may be set in such a way so as to rapidly establish or re-establish the required or target cooking temperature or condition, and to avoid scorching of the food added to the vessel.

The new heating or power level may be set or limited to a value somewhat lower than the maximal heating level or power of the heating element, in particular lower than the heating power used in a preceding operational phase, such as the heat-up phase. For example, the power level may be reduced by 1000W as compared to the heat-up phase.

Power levels used in the wait-for-load and/or react-to-load phase may be calculated by the controller using formula which in turn use parameters like the temperature difference between the actual liquid temperature and the desired liquid temperature, the pre-set liquid temperature, the amount of liquid, other control parameters and operational variables. The mentioned parameters and variables may be determined and/or calculated by the controller, in particular, and as far as required, using temperature values determined by the temperature sensor immersed in the liquid.

In a step or phase subsequent to the react-to-load phase, the controller may transfer the cooking hob assembly, in particular the cooking zone or hob or a respective heating element, into a keep-simmering phase in which the controller powers the heating element so as to track a pre-set simmering or cooking profile, e.g. in which the temperature of the liquid is controlled to track a pre-set cooking or simmering temperature level or temperature profile. Note that the temperature profile may comprise at least a phase of constant temperature over time.

The power level of the heating element in the keep-simmering phase in particular may be determined to avoid overboiling of the liquid, in particular water, or to avoid the used liquid, such as oil and milk, to burn.

The heating level may be calculated by the controller by using parameters like the amount of liquid, the desired or target cooking, boiling, simmering, poaching, deep-frying level, and/or temperature level, in particular Sous Vide temperature level.

The keep-simmering phase, and the whole cooking process, may be terminated by the controller upon expiry of a pre-set period of time, i.e. a time duration required for simmering, boiling etc., the food, or upon expiry of an overall timeout duration.

The timeout duration may be set so as to avoid hazards in particular in case that all the liquid, in particular water, originally contained in the cooking vessel has evaporated. The timeout duration may be a fixed pre-set parameter, or may be determined by the controller based on the amount of liquid, actual simmering levels and/or the temperature profile of the cooking procedure.

At the end of the keep simmering phase, the controller may, as has been mentioned, stop the cooking process. In particular, the controller may shut down the heating element after operating the heating element for a pre-set time duration and according to a pre-set time profile in the keep-simmering phase.

However, in case that the user determines that the food after the keep-simmering phase still needs to be heated or boiled, the proposed method may in variants provide that the user can extend or resume the keep-simmering phase for a certain additional time interval.

In more general terms, the controller may be adapted to extend or resume a respective cooking phase in response to a user input directed to change the cooking profile or cooking program. A change in the cooking profile may for example be directed to extend the keep-simmering phase.

Resuming the keep-simmering phase in particular may comprise setting the same or similar operational conditions as in the previous, already finished, keep-simmering phase.

Further, resuming the keep-simmering phase may comprise the execution of at least one of the cooking phases preceding the keep-simmering phase. In particular, the controller may recalculate the heating level or power, in particular may again determine the actual amount of liquid and other parameters and accordingly may calculate the power level needed or adequate for execution of the cooking phase.

A possibility of extension of the timer or cooking time intervals of cooking phases may be implemented such that an extension, e.g. by a user, may be made in defined time intervals directly after an end condition of a cooking timer is reached. The time interval in particular may be set such that a user may check the cooking result of a respective cooking procedure, e.g. such that the user has sufficient time for a short check, e.g. if the pasta is ready. If the consumer or user extends the timer the same operational settings and parameters, such as power, and the like as in a respective previous cooking phase may be used. The controller may be adapted to adapt the power level of the heating element in accordance with the temperature difference between the set temperature and the current sensor temperature. This in particular may be optimized to reach the desired target temperature in a comparatively short time.

In particular with the proposed operational phases, in particular cooking phases, i.e. a heat-up phase which may constitute a first phase, a wait-for-load phase which may constitute a second phase, a react-to-load phase which may constitute a tertiary phase and the keep-simmering phase which may constitute a fourth phase, an at least semi-automated or even automated cooking process can be provided for heating elements of cooking zones or hobs.

In cooking processes as mentioned beforehand, the user may put a vessel filled with a suitable amount of liquid onto the cooking zone or hob, or heating element, and start the cooking procedure or program.

In a first heat-up phase, the controller may heat up the liquid with the maximal power level to bring it to a predefined set temperature, such as for example the boiling point.

Once the liquid has reached the set temperature, e.g. the boiling point or is boiling, the controller may power the heating element so as to keep the reached temperature, for example boiling point, but avoiding overtemperatures, leading for example to overboiling or scorching. In this phase, the liquid is ready for receiving the food to be cooked, and therefore represents a wait-for-load phase.

Once the user puts the food to be cooked into the vessel, which in ordinary practice will change, e.g. lower, the temperature level of the liquid in the vessel, in particular boiling level, of the liquid, the controller starts to re-establish the required temperature level, in particular boiling or simmering level, again.

After re-establishment of the required temperature level, the controller may keep the liquid temperature at the desired or target set temperature, in particular boiling or simmering level, in order to adequately treat the food. It shall be noted, that in certain cooking programs, e.g. for rice, potatoes, vegetables and similar, respective food products may be required to be added from the beginning.

As can be seen, the proposed method allows automatic liquid-based cooking procedures, in particular water-based boiling procedures.

In embodiments and variants, the controller may operate the heating element in such a way that a user-set cooking level, in particular boiling level, simmering level, poaching-level, deep-frying level and/or liquid temperature and similar, is obtained at a user-set point of time or not later than a user-set time period. The controller may determine or calculate a future activation time-point for powering the heating element so as to timely achieve the user-set target cooking level. As soon as the activation time-point is reached, the controller may activate the heating element, in particular initiate heating up of the liquid.

In particular in such embodiments, the controller may in a first step determine or estimate the amount of liquid. Based on the amount of liquid, the controller may determine the energy, heating power level and/or time duration needed for heating up the liquid to the desired target cooking level. After determining the energy, heating power level and/or time duration etc., the controller may activate the heating element according to a suitable operational course and operational parameters leading to the desired target cooking level within or at the given time. The functionality as described beforehand may be designated a cooking-delay, in particular boil-delay.

As an example, the controller may first determine the required energy and heating time, and then, possibly after a time delay, the controller may activate the heating element, in particular with maximal heating power, at a time-point as close as possible to the user-set point of time, so as to conveniently obtain the desired boiling level.

If there is sufficient time between the activation of the boil-delay functionality and the user-set point of time, or if the user sets a sufficiently long period, the controller may first determine or calculate the time duration needed for obtaining the desired boiling level, and activate the heating element at a later time-point such that the end of the time duration corresponds to the user-set point of time, or lies at the end of the user-set period. In such preliminary phases, the controller may initiate an operational phase for the determination of the amount of liquid contained in the cooking vessel placed on the heating element.

As an example, the user may require boiling water in 20 minutes, and the controller may determine a time duration of for example 5 minutes to bring the water to the desired boiling level. Then the controller may activate the heating element 5 minutes before expiry of the 20 minutes period so as to obtain boiling water after 20 minutes after activation of the boil-delay function.

In other words, the controller implemented with a cooking-delay function, in particular boiling-delay function, may, after having determined or calculated a time duration required to arrive at a desired cooking level, delay the first phase, in particular heat-up phase, and start the heat-up procedure at a point of time lying the length of the time duration before the user-set point of time when the desired boiling level shall be obtained.

Implementing a boil delay in particular may lead to efficient, in particular energy efficient, modes of operation.

In embodiments and variants of the invention, the controller may be adapted to operate the heating element in such a way that a user-set cooking result is obtained at a user-set point of time or not later than a user-set time period.

Operating the controller such that a user-set cooking result, i.e. a cooking result desired by the user and to be achieved at a certain point of time, may provide user convenient automated cooking possibilities. In particular, the controller may be operated to determine a future point of time, i.e. starting time, in which a cooking process has to be started in order to timely obtain the desired cooking result.

In determining or calculating the time point when to start cooking, the controller may use the amount of liquid, the liquid temperature, allowed or available power levels and other parameters.

In embodiments and variants of the invention, the controller may be adapted to match or correlate the power level of the heating element with the temperature or temperature change detected via the temperature sensor, and in case of a discrepancy to shut off the heating element.

If, for example, the heating element is operated at the maximum power level and the controller determines that the temperature sensed by the temperature sensor decreases, which may be indicative of lacking liquid, the controller may shut off the heating element, in particular in order to avoid overheating of the cooking vessel.

Further, if for example the controller activates a heating element of a cooking zone or hob to start a cooking program, and the controller determines no temperature change at all, which may indicate that either the temperature sensor is not in the cooking vessel or that the cooking vessel with temperature sensor is not positioned on the right cooking zone or hob, the controller may shut off the heating element, in particular in order to avoid further heating or overheating of the cooking zone or hob.

Other situations may be conceivable in which discrepancies between the power level and temperature or temperature change may be indicative of hazardous situations requiring a shut-off of the heating element.

In variants, the cooking hob assembly, in particular the controller and/or temperature sensor may be adapted such that it/they can be calibrated to different liquid cooking points, in particular water boiling points. Calibration in particular may be required for setting or defining the boiling point of water which changes with altitude and/or weather conditions. The cooking hob assembly may comprise electronic means for automatically determining respective conditions, and/or the cooking zone or hob may be adapted to allow the user to specify operational, in particular environmental, conditions.

In embodiments, the controller may be adapted to and in operational phases may execute a calibration functionality in which a boiling point operational parameter of a liquid used for cooking is calibrated according to values prevailing at an actual geographic location of operation of the cooking hob assembly.

In particular, the controller may be adapted and may be operated such that a temperature setting in at least one of the cooking phases is effected or configured relative to a geographic boiling point prevailing at or representative of the geographical position in which the cooking hob assembly is operated at.

Using the geographical boiling point prevailing in the location of operation of the cooking hob assembly in particular may be advantageous for setting up or conducting universal cooking programs.

According to claim 11, a controller for controlling a cooking hob assembly which comprises a cooking zone or hob, a temperature sensor, and a heating element is provided. The proposed controller is adapted and configured to execute a method according to the invention, in particular according to any embodiment and variant thereof. Advantages and advantageous effects of the controller in particular result from the description above.

In embodiments, the controller may comprise a temperature sensing unit comprising the temperature sensor. In other words, the temperature sensor may be part of a temperature sensing unit.

The temperature sensor in particular may be a mobile-type sensor, configured to be essentially freely handleable and/or freely positionable at least within a section of the cooking area of the cooking hob assembly and/or within cooking vessels placed on the cooking area. In particular, the temperature sensor may be an external type sensor, i.e. a sensor that is not fixedly installed with the cooking arrangement or cooking zone or hob.

The temperature sensing unit may comprise an interface configured to connect the temperature sensor to the controller such that temperature signals of the liquid measured by the temperature sensor can be transmitted to the controller and used by the controller for controlling the cooking zone or hob, in particular to obtain a pre-set temperature-level or temperature profile.

A connection between the temperature sensor and the interface or controller, adapted to interchange or transmit temperature sensor signals, may be at least one of a wire-based and wire-less connection.

A combined wire-based and wire-less connection may be provided in variants of the cooking hob assembly in which the external temperature sensor is, via a wire-based connection, connected to an interface box configured to be placed on or near the cooktop.

The interface box may be adapted to receive via the wire-based connection temperature signals of the temperature sensor and pass them on or forward them via a wire-less communication to the controller which may be arranged at a remote location, such as for example beneath an upper-plate of the cooking zone or hob. The communication in particular may be adapted such that temperature signals can be transmitted to the controller such that it can use the temperature signals for controlling the cooking zone or hob, in particular heating element.

The temperature sensing unit, the interface, the interface box, and/or controller may be configured and implemented with the cooktop arrangement such that they can be operated and handled via a user control interface adapted and configured to allow a user setting operational parameters of the cooktop.

The temperature sensing arrangement, and in particular temperature sensor, as described beforehand may be advantageous for liquid-based cooking processes as described hereinabove, in particular for obtaining reliable temperature values required for semi-automated or automated cooking.

Further, the temperature sensing arrangement, and in particular temperature sensor, may be advantageous in cases where a user intends to apply a so-called "Sous Vide" cooking technique. In such cooking techniques, temperature sensing and temperature control of the liquid in use is of great relevance to obtain the desired cooking result.

As can be derived from the above description, the proposed temperature sensing arrangement is able to provide reliable and satisfactory temperature sensing and control even for sensitive cooking techniques such as "Sous Vide".

According to claim 13, a cooking hob assembly comprising a cooking zone or hob with a heating element, a controller, and a temperature sensor is provided. The controller is configured and adapted to execute a method according to the invention, in particular according to any embodiment and variant thereof. Advantages and advantageous effects of the controller in particular result from the description above.

The invention will now be described in more detail in an exemplary embodiment in connection with the annexed figures, in which:

FIG. 1     shows a cross-sectional view of a cooking hob assembly in a fist operational state;

FIG. 2     shows a cross-sectional view of a cooking hob assembly in a second operational state; and

FIG. 3     shows a flowchart of a method of operating the cooking hob assembly.

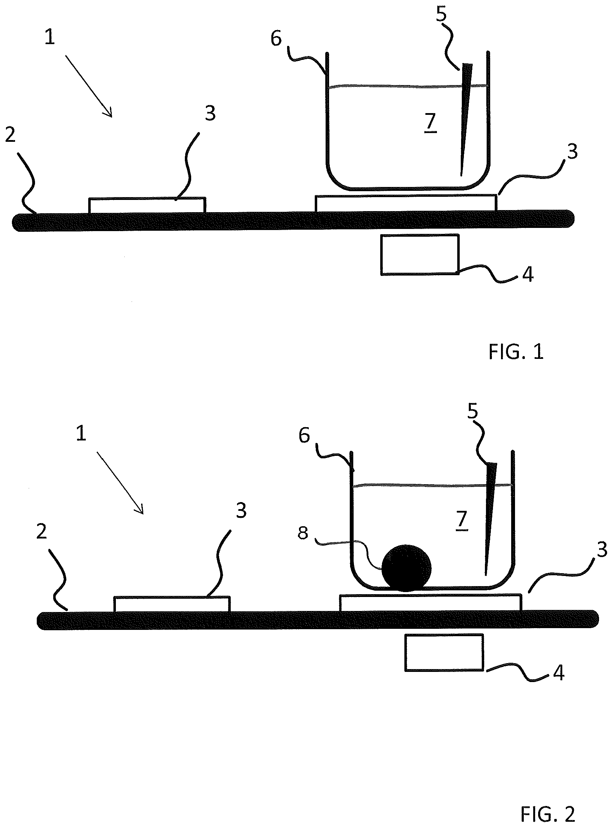

FIG. 1 shows a cross-sectional view of a cooking hob assembly 1 in a fist operational state, and FIG. 2 shows a cross-sectional view of the cooking hob assembly in a second operational state.

The cooking hob assembly 1 comprises a cooktop 2, several cooking zones 3, a controller 4, and a temperature sensor 5. In the view shown in FIG. 1 and 2, two cooking zones are visible. However, the cooking hob assembly may comprise any number of cooking zones or hobs, which may be operated as described below.

On the right-hand cooking zone 3 a pot 6, i.e. a cooking vessel, is positioned, which is partially filled with liquid 7, such as water, representing a cooking liquid. The temperature sensor 5 is immersed into the liquid 7, and connected to the controller 4 so that the controller can measure or determine the liquid temperature inside the pot 6. Respective connection between the temperature sensor and controller may be wireless or wire-bound. The controller 4 is adapted such that it can operate the cooking zone 3 or hob, in particular such that it can activate and deactivate, and set required heating or power levels of a heating element (not explicitly shown) of the cooking zone 3.

In particular, the controller 4 may be connected with the temperature sensor and with the heating element in order to be able to control the cooking zone 3 or hob in dependence of temperature values measured by the temperature sensor.

If the user wants to cook a food product 8 (see FIG. 2) it is in some cases required to first heat the liquid 7 up to the respective set temperature, such as the boiling temperature, and then to put the food product into the appropriately heated liquid 7.

In order to be able to at least semi-automatically conduct the afore mentioned cooking procedures, the controller 4 may adapted and configured to directly control in an open or closed loop control, or in a control method comprising both an open and closed loop control, the liquid temperature according to a desired or given temperature profile applicable to respective food products. As food products, potatoes, rice, pasta, vegetables or similar may be considered.

The controller may be adapted such that the closed loop control comprises at least one of different operational phases, which in the present exemplary embodiment are represented by a heat-up phase H, a wait-for-load phase W, a react-to-load phase R and a keep-simmering phase K, which will be abbreviated by phase H, phase W, phase R and phase K.

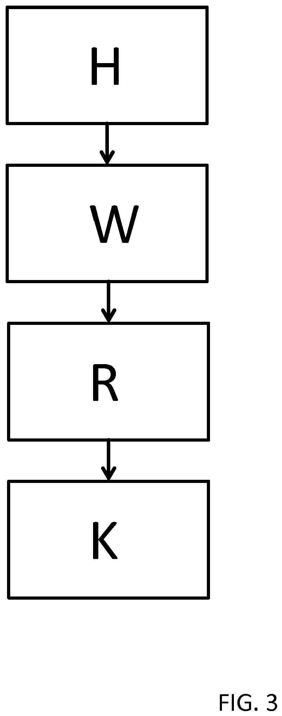

Below, these single operational phases H, W, R, K are described, in more details in particular with reference to FIG. 1 to 3, wherein FIG. 3 shows a flowchart related to the operational phases.

In phase H, liquid 7 inside the pot 6 is brought from for example room temperature to a pre-set, in particular intended, cooking point, e.g. the boiling point. It shall be noted that in phase H there is no food product in the pot. Note, that for example for rice and potatoes, they may be placed inside the pot during phase 1. The controller 4 operates the heating element, in particular cooking zone 3, to heat the pot 6 and liquid 7 with maximal power, i.e. with the maximal power level.

If the controller 4, which monitors the liquid temperature during heat-up via the temperature sensor 5, determines that the cooking level, e.g. boiling point, or a set temperature, e.g. for dumplings or similar, is reached, the controller 4 ends phase H and transfers the cooking zone 3 from phase H to phase W, or in alternatives directly to the last phase.

In case that the boiling point is not reached within a pre-set timeout duration, the controller 4 stops the cooking procedure, as the failure to achieve the boiling point may be indicative of operational discrepancies.

Also, in case that the controller 4 determines that the amount of liquid 7 contained within the pot 6 is above a given limit, e.g. 5 litres, or below a given limit, the controller 4 may stop the cooking procedure.

With the present embodiment, the controller 4 is adapted to determine at least in phase H the amount of liquid 7 contained within the pot 6. This may be done by using operational parameters like the power level of the cooking zone 3, the actual temperature, an actual temperature change, time and others.

As mentioned above, the controller 4 transfers the cooking hob assembly 1 to phase W in case that the end of phase H, i.e. the boiling point, is reached.

In phase W, the controller 4 operates the cooking zone 3, i.e. heating element, in such a way so as to keep the liquid 7 at or slightly below the desired boiling point, or at a lower temperature for poaching programs, for example applicable to dumplings, sausages, reheat and so on. In phase W, the liquid 7 contained within the pot 6 is ready for receiving the food product, which illustrates the wait-for-load status.

The heating power applied in phase W may be selected to lie between a lower power limit, such for example 1200W, and the maximal power limit, in particular applied in phase H. An adequate power level for keeping the liquid 7 at or near the desired boiling point, without overboiling it, may be calculated with a formula comprising as input variables for example the actual temperature difference between liquid temperature and desired boiling temperature, the estimated amount of liquid 7 as determined by the controller 4 in a previous step, and other operational parameters

As can be seen, phase W may be provided to keep the liquid 7 inside the pot 6 in a condition ready for receiving the food product 8.

If the controller 4 detects that a food product 8 is put or placed into the pot 6, i.e. liquid 7, the controller transfers phase W to phase R. This detection may be conducted automatically, for example via a decreasing temperature, or via a user action involving pressing a button.

Note that for security reasons, the controller 4 may stop the cooking procedure after a predetermined timeout duration, in particular in cases where no food product is put into the pot 6 within the timeout duration. If a food product 8 is placed into the pot 6 within the timeout duration, the controller 4, as already mentioned, transfers phase W to phase R, i.e. the react-to-load phase.

In phase R, the controller 4 operates the cooking zone 3, in particular heating element, such that the desired cooking, in particular boiling, level of liquid 7, e.g. water, and food product 8 are obtained, in particular are established or re-established. Here, a somewhat higher heating power than in phase W may be applied, but it may be limited to a value lower than the maximal power applied in phase H.

The heating power in phase R may for example be calculated by subtracting a pre-set power, for example 1000W, from the maximal power applied in phase H.

Aim of phase R is to obtain or reach the desired cooking temperature after adding the food product 8, which is illustrative for the react-to-load character.

Similar to the other phases, phase R may provide a safety shutdown, in particular in case that the desired boiling temperature or level cannot be obtained, in particular established or re-established, after a predetermined timeout duration.

If the desired target cooking level can be obtained or reached in phase R, the controller 4 may transfer phase R to phase K. In phase K, the cooking procedure is continued, wherein the food product 8 is cooked with the desired set temperature, in particular target boiling level, in particular for a desired cooking or boiling time.

In phase K, the power level or heating level of the heating element of the cooking zone 3 for obtaining a desired simmering level, i.e. boiling or cooking level, may be calculated by a formula dependent on the amount of liquid, the actual liquid temperature, actual temperature changes, time, simmering or boiling level, and other parameters, in particular operational parameters.

End of phase K may be reached after a given cooking or boiling or simmering time set by a user or defined in a cooking program. At the end of phase K, the controller may shut down, i.e. deactivate, the heating element.

After phase K, the boiling or cooking procedure may be finished, unless the user decides to continue cooking or boiling. In case that the user wants to continue cooking, the user may extend the simmering time, and the controller 4 may operate the cooking zone 3, in particular heating element, so as to establish or re-establish the simmering modalities of phase K, or, if the user decided to change the simmering modalities, according to altered simmering modalities. In the extended operational phase, the controller 4 may in particular operate the heating element in modes similar to that of phase H or R.

As can be seen from the description above, the proposed method, controller and cooking hob assembly provide possibilities for effectively and user friendly conducting liquid-based, in particular water-based, cooking processes, in particular involving boiling, simmering, poaching, deep-frying and so on, in particular at least in a semi-automated manner.

With the present example, the controller 4 may comprise a calibration functionality, which allows calibration of the cooking hob assembly to the liquid, in particular water, boiling point prevailing at the actual location of operation. Here, the user or controller 4 may heat up liquid until the liquid temperature remains essentially constant, which may for example be indicative of boiling water. The respective temperature value may be stored as the actual boiling point in a memory of the controller 4 for subsequent use.

The controller 4 in the present example may comprise a boil-delay functionality, in which the controller 4 delays heating the liquid 7 up to the desired boiling level in phase H such that the desired boiling level is available at a pre-set future point of time, or after a pre-set time period, which may be set by the user. Such a boil-delay functionality may be convenient for the user and on the other side allow energy savings.

For example, if the user wants a specific boiling level to be available in 20 minutes, and heating up the liquid to the boiling level requires 3 minutes, the heat-up, i.e. phase H, may be started 17 minutes after activation of the boiling program or procedure.

In particular in case of a boil-delay functionality, the controller in general may determine or estimate the amount of liquid, and at least based on the amount of liquid, optionally based also on other parameters such as the liquid temperature, the heating power or level, may calculate a starting point in which heating up of the liquid has to be started in order to timely provide the desired target boiling level.

Note that if the duration between determining the starting point and the calculated starting point is relatively large, the controller 4 may insert an idle time or standby mode, and at the starting point may activate the cooking zone 3 to heat up the liquid to the desired boiling level.

In all it becomes obvious from the above description and the detailed description of exemplary embodiments, that the proposed method, controller and cooking hob assembly are effective in providing user friendly and safe conduction of cooking, in particular boiling, simmering, poaching, deep-frying, procedures. In addition overboiling can be prevented, and correct cooking levels, in particular simmering levels and boiling points, can be guaranteed. Besides that, the proposed method and cooking hob assembly does not require special cookware, but is adequate for any cookware suitable for cooking, in particular boiling, simmering, poaching and/or deep-frying, food. In particular, the proposed method works independently of pot size, pot type, pot and lid material, amount of liquid, and hob temperature.

**List of reference numerals**

1    cooking hob assembly
2    cooktop
3    cooking zone
4    controller
5    temperature sensor
6    pot
7    liquid

H    heat-up phase
W    wait-for-load phase
R    react-to-load phase
K    keep-simmering phase

**Claims**

**1.**  Method of conducting a liquid-based, in particular Sous Vide, cooking process for food (8) with a cooking hob assembly (1) which comprises a cooking zone (3) with at least one heating element, a controller (4) and a temperature sensor (5), comprising, by the controller(4):

- measuring a liquid temperature of liquid (7) inside a cooking vessel (6) placed on the heating element of the cooking zone (3) via the temperature sensor (5) which is at least partly immersed in the liquid (7);

- controlling the liquid temperature of the liquid in accordance with a pre-set temperature profile over time by adequately powering (W, R, K) the heating element on which the cooking vessel is placed in dependency of the measured liquid temperature;
- powering (H) as an initial operational heat-up phase the heating element with a pre-set heat-up power level in an open or closed loop control so as to heat up the liquid (7) to a pre-set temperature;
- determining in the initial or an intermediate operational phase an amount of liquid contained in the cooking vessel (6) and using the amount of liquid thus determined in at least one subsequent operational phase (H, W, R, K) as one of the parameters for calculating and setting the heating power level of the heating element;
- entering after the heat-up phase, in particular immediately after the heat-up-phase, a wait-for-load phase, in which load changes occurring within the cooking vessel are monitored and detected by the controller (4);
- upon detecting a load change and/or upon user confirmation, automatically transferring the cooking hob assembly (1) into a react-to-load-phase (R), and operating the heating element so as to re-establish the cooking temperature prior to the load change;
- subsequently to the react-to-load phase (R) transferring the cooking hob assembly (1) to a keep-simmering phase (K) and, powering the heating element so as to track a pre-set cooking profile.

2. Method according to claim 1, comprising, by the controller (4), estimating the amount of liquid contained in a cooking vessel (6) from an actual power level of the heating element, the liquid temperature measured by the temperature sensor, a rate of change of the liquid temperature, and/or time, wherein calculation of the amount of liquid optionally is active in an initial phase, preferably with liquid temperatures of up to a threshold value of 70°C, or continued up to 80°C, wherein when reaching the threshold value, the value of amount of liquid determined optionally is saved and used as a control parameter in subsequent phases; wherein calculating the amount of liquid optionally may start when a predetermined number of temperature values have been measured after beginning a chosen cooking program.

3. Method according to claim 1 or 2, comprising, by the controller (4), operating the heating element in such a way that a user-set cooking result is obtained at a user-set point of time or not later than a user-set time period.

4. Method according to at least one of claims 1 to 3, comprising, by the controller (4), the power level of the heating element with the temperature or temperature change detected via the temperature sensor (5), and in case of a discrepancy shutting off the heating element.

5. Method according to at least one of claims 1 to 4, wherein in case that it is determined that the amount of liquid lies below a given threshold value, applying, by the controller (4), a reduced heat up power level to the heating element, wherein the amount of the reduction in the power level is related to a difference of the liquid level relative to the threshold value.

6. Method according to any of claims 1 to 5, comprising, by the controller (4), calculating the amount of liquid every operational phase only until the sensor-temperature reaches a predetermined threshold, wherein the threshold preferably is 80°C or 70°C.

7. Method according to at least one of claims 1 to 6, comprising one or more than one of the following features:

by the controller (4), keeping, in the wait-for-load phase, the temperature level of the liquid inside the vessel may be kept at the pre-set temperature or condition by adequately setting the power level of the heating element;
in the react to load phase, by the controller (4) determining a new heating or power level for the heating element that is suitable and adequate to establish the target cooking level, in particular in adequate time intervals;
by the controller (4), resuming the keep-simmering phase (K) in response to a user input directed to change the cooking profile or cooking program, wherein upon resuming the keep simmering phase, by the controller (4), recalculating the heating level and/or determining the actual amount of liquid, wherein resuming the keep-simmering phase by a user input is preferably enabled only within a predefined time interval directly after an end condition of a cooking timer is reached;
by the controller (4), stopping the keep simmering phase by shutting down the heating element after operating the heating element for a pre-set time duration and according to a pre-set time profile in the keep-simmering phase.

8. Method according to at least one of claims 1 to 7, comprising, by the controller (4), operating the heating element in a cooking-delay mode in which a user-set cooking level and/or liquid temperature is obtained at a user-set future point of time, comprising, by the controller(4), determining and calculating a future activation time-point for powering the heating element so as to timely achieve the user-set future target cooking level, and, as soon as the activation time-point is reached, activating, by the controller (4), the heating element to initiate heating up of the liquid.

9. Method according to claim 8, comprising, by the controller (4), determining based on the amount of liquid, an energy, heating power level and time duration needed for heating up the liquid to the desired target cooking level, and activating the heating element accordingly to obtain the desired target cooking level at the user-set point of time.

10. Method according to any of claims 1 to 9, comprising, by the controller (4), executing a calibration in which a boiling point operational parameter of a liquid used for cooking is calibrated according to values prevailing at an actual geographic location of operation of the cooking hob assembly (1), and/or effecting, by the controller (4), a temperature setting in at least one of the cooking phases relative to a geographic liquid boiling point prevailing at or representative of the geographical position in which the cooking hob assembly is operated at.

11. Controller (4) for controlling a cooking hob assembly (1) comprising a cooking zone (3), a temperature sensor (5), and a heating element, wherein the controller (4) is configured and adapted to execute a method according to at least one of claims 1 to 10.

12. Controller (4) according to claim 11, wherein the temperature sensor (5) is a mobile-type sensor moveable at least within a given section of a cooking area of the cooking hob assembly (1).

13. Cooking hob assembly (1) comprising a cooking zone (3) with a heating element, a controller (4), and a temperature sensor (5), wherein the controller (4) is configured and adapted to execute a method according to at least one of claims 1 to 10.

14. Cooking hob assembly (1) according to claim 13, wherein the temperature sensor (5) is a mobile-type sensor moveable at least within a given section of a cooking area of the cooking hob assembly (1).

## Patentansprüche

1. Verfahren zur Durchführung eines flüssigkeitsbasierten, insbesondere Sousvide-, Kochverfahrens für Nahrungsmittel (8) mit einer Herdplattenanordnung (1), die eine Kochzone (3) mit mindestens einem Heizelement, einem Regler (4) und einem Temperatursensor (5) umfasst, umfassend, durch den Regler (4):

- das Messen einer Flüssigkeitstemperatur einer Flüssigkeit (7) innerhalb eines Kochgefäßes (6), das auf das Heizelement der Kochzone (3) positioniert ist, über den Temperatursensor (5), der mindestens teilweise in die Flüssigkeit (7) eingetaucht ist;
- das Regulieren der Flüssigkeitstemperatur der Flüssigkeit einem voreingestellten Temperaturprofil entsprechend im Zeitverlauf durch ausreichendes Versorgen des Heizelements, auf dem das Kochgefäß positioniert ist, mit Energie (W, R, K) in Abhängigkeit von der gemessenen Flüssigkeitstemperatur;
- das Versorgen mit Energie (H), als anfängliche betriebsmäßige Erhitzungsphase, des Heizelements mit einem voreingestellten Erhitzungsenergieniveau mit einer Regelung mit offener oder geschlossener Rückführung, um die Flüssigkeit (7) auf eine voreingestellte Temperatur zu erhitzen;
- das Bestimmen in der anfänglichen oder einer zwischenzeitlichen betriebsmäßigen Phase einer Menge Flüssigkeit, die in dem Kochgefäß (6) enthalten ist und das Verwenden der Menge der so bestimmten Flüssigkeit in mindestens einer darauffolgenden betriebsmäßigen Phase (H, W, R, K) als einen der Parameter zum Berechnen und Einstellen des Erhitzungsenergieniveaus des Heizelements;
- das Eingeben, nach der Erhitzungsphase, insbesondere sofort nach der Erhitzungsphase, einer Phase des Wartens auf Beladen, während der Ladungsänderungen, die innerhalb des Kochgefäßes auftreten, durch den Regler (4) überwacht und erfasst werden;
- auf das Erfassen einer Ladungsänderung und/oder auf die Bestätigung des Benutzers hin, das automatische Überführen der Herdplattenanordnung (1) in eine Phase des Reagierens auf Beladen (R) und das Betätigen des Heizelements, um die Kochtemperatur vor der Ladungsänderung wiederherzustellen;
- auf die Phase des Reagierens auf Beladen (R) folgend, Überführen der Herdplattenanordnung (1) in eine Phase des Köchelnlassens (K) und Versorgen des Heizelements mit Energie, um ein voreingestelltes Kochprofil nachzuverfolgen.

**2.** Verfahren nach Anspruch 1, umfassend, durch den Regler (4), das Abschätzen der Menge an Flüssigkeit, die in einem Kochgefäß (6) enthalten ist, von einem tatsächlichen Energieniveau des Heizelements, der Flüssigkeitstemperatur, die durch den Temperatursensor gemessen wird, einer Änderungsrate der Flüssigkeitstemperatur und/oder der Zeit, wobei die Berechnung der Menge an Flüssigkeit wahlweise in einer anfänglichen Phase, bevorzugt bei Flüssigkeitstemperaturen von bis zu einem Grenzwert von 70 °C oder fortdauernd bis zu 80 °C aktiv ist, wobei, wenn der Grenzwert erreicht wird, der Wert der bestimmten Menge an Flüssigkeit wahlweise gespeichert und als Kontrollparameter in darauffolgenden Phasen verwendet wird; wobei das Berechnen der Menge an Flüssigkeit wahlweise dann beginnen kann, wenn eine vorbestimmte Anzahl von Temperaturwerten nach Beginn eines ausgewählten Kochprogramms gemessen worden ist.

**3.** Verfahren nach Anspruch 1 oder 2, umfassend, durch den Regler (4), das Betätigen des Heizelements derart, dass ein durch den Verwender eingestelltes Kochergebnis zu einem durch den Verwender eingestellten Zeitpunkt oder nicht nach einer durch den Verwender eingestellten Zeitspanne erhalten wird.

**4.** Verfahren nach mindestens einem der Ansprüche 1 bis 3, umfassend dass, durch den Regler (4), das Energieniveau des Heizelements mit der Temperatur oder der Temperaturänderung, die über den Temperatursensor (5) erfasst wird, und im Fall einer Abweichung, das Heizelement abgeschaltet wird.

**5.** Verfahren nach mindestens einem der Ansprüche 1 bis 4, wobei, in dem Fall, in dem bestimmt wird, dass die Menge an Flüssigkeit unterhalb eines vorgegebenen Grenzwertes liegt, durch den Regler (4) ein reduziertes Aufheizenergieniveau auf das Heizelement aufgebracht wird, wobei die Menge der Reduktion im Energieniveau mit einem Unterschied des Flüssigkeitsniveaus mit Bezug auf den Grenzwert verbunden ist.

**6.** Verfahren nach einem der Ansprüche 1 bis 5, umfassend, durch den Regler (4), das Berechnen der Menge an Flüssigkeit jeder Betätigungsphase nur bis die Sensortemperatur einen vorbestimmten Grenzwert erreicht, wobei der Grenzwert bevorzugt 80 °C oder 70 °C beträgt.

**7.** Verfahren nach mindestens einem der Ansprüche 1 bis 6, umfassend eine oder mehr als eine der folgenden Funktionen:

durch den Regler (4) Halten, in der Phase des Wartens auf Beladen, das Temperaturniveau der Flüssigkeit innerhalb des Gefäßes kann bei der vorher eingestellten Temperatur oder dem vorher eingestellten Zustand durch angemessenes Einstellen des Energieniveaus des Heizelements gehalten werden;
in der Phase des Reagierens auf Beladen, durch den Regler (4), Bestimmen eines neuen Heiz- oder Energieniveaus für das Heizelement, das geeignet und ausreichend ist, um das Zielkochniveau, insbesondere innerhalb ausreichender Zeitintervalle, einzurichten;
durch den Regler (4) Wiederaufnehmen der Phase des Köchelnlassens (K) als Reaktion auf eine Benutzereingabe, die darauf gerichtet ist, das Kochprofil oder das Kochprogramm zu ändern, wobei, auf das Wiederaufnehmen der Phase des Köchelnlassens, durch den Regler (4), erneutes Berechnen des Erhitzungsniveaus und/oder Bestimmen der tatsächlichen Menge an Flüssigkeit, wobei das Wiederaufnehmen der Phase des Köchelnlassens durch eine Benutzereingabe bevorzugt nur innerhalb eines vordefinierten Zeitintervalls direkt nachdem ein Endzustand einer Kochzeitschaltuhr erreicht ist, ermöglicht wird,
durch den Regler (4), Beenden der Phase des Köchelnlassens durch Abstellen des Heizelements nach dem Betätigen des Heizelements für eine vorbestimmte Zeitdauer und einem voreingestellten Zeitprofil entsprechend während der Phase des Köchelnlassens.

**8.** Verfahren nach mindestens einem der Ansprüche 1 bis 7, umfassend, durch den Regler (4), das Betätigen des Heizelements in einem Kochverzögerungsmodus, wobei ein durch den Benutzer eingestelltes Kochniveau und/oder eine Flüssigkeitstemperatur zu einem durch den Benutzer eingestellten künftigen Zeitpunkt erhalten wird, umfassend, durch den Regler (4), das Bestimmen und Berechnen eines künftigen Aktivierungszeitpunkts für das Versorgen des Heizelements mit Energie, um rechtzeitig das durch den Benutzer festgelegte künftige Zielkochniveau zu erreichen und, sobald der Aktivierungszeitpunkt erreicht worden ist, Aktivieren, durch den Regler (4), des Heizelements, um das Erhitzen der Flüssigkeit einzuleiten.

**9.** Verfahren nach Anspruch 8, umfassend, durch den Regler (4), das Bestimmen, auf der Basis der Menge an Flüssigkeit, einer Energie, eines Heizenergieniveaus und einer Zeitdauer, die für das Erhitzen der Flüssigkeit auf das erwünschte Zielkochniveau erforderlich sind, und das entsprechende Aktivieren des Heizelements, um das erwünschte Zielkochniveau zum durch den Benutzer eingestellten Zeitpunkt zu erhalten.

**10.** Verfahren nach einem der Ansprüche 1 bis 9, umfassend, durch den Regler (4), das Ausführen einer Kalibrierung, wobei ein Siedepunktbetriebsparameter einer Flüssigkeit, die zum Kochen verwendet wird, Werten entsprechend kalibriert wird, die an einem tatsächlichen geographischen Betätigungsort der Herdplattenanordnung (1) vorherrschen und/oder Ausführen, durch den Regler (4), einer Temperatureinstellung in mindestens einer der Kochphasen mit Bezug auf einen geographischen Flüssigkeitssiedepunkt, der an der geographischen Position vorherrscht oder dafür repräsentativ ist, an der die Herdplattenanordnung betätigt wird.

**11.** Regler (4) zum Regeln einer Herdplattenanordnung (1), umfassend eine Kochzone (3), einen Temperatursensor (5) und ein Heizelement, wobei der Regler (4) konfiguriert und geeignet ist, ein Verfahren nach mindestens einem der Ansprüche 1 bis 10 auszuführen.

**12.** Regler (4) nach Anspruch 11, wobei der Temperatursensor (5) ein Sensor vom Mobiltyp ist, der mindestens innerhalb eines vorgegebenen Abschnitts eines Kochbereichs der Herdplattenanordnung (1) bewegbar ist.

**13.** Herdplattenanordnung (1), umfassend eine Kochzone (3) mit einem Heizelement, einem Regler (4) und einem Temperatursensor (5), wobei der Regler (4) konfiguriert und geeignet ist, ein Verfahren nach mindestens einem der Ansprüche 1 bis 10 auszuführen.

**14.** Herdplattenanordnung (1) nach Anspruch 13, wobei der Temperatursensor (5) ein Sensor vom Mobiltyp ist, der mindestens innerhalb eines vorgegebenen Abschnitts eines Kochbereichs der Herdplattenanordnung (1) bewegbar ist.

**Revendications**

**1.** Procédé d'exécution d'un processus de cuisson, en particulier sous vide, à base de liquide pour des aliments (8) avec un ensemble table de cuisson (1) qui comprend une zone de cuisson (3) avec au moins un élément chauffant, un dispositif de commande (4) et un capteur de température (5), comprenant, par le dispositif de commande (4) :

   - la mesure d'une température de liquide de liquide (7) à l'intérieur d'un récipient de cuisson (6) placé sur l'élément chauffant de la zone de cuisson (3) par l'intermédiaire du capteur de température (5) qui est au moins partiellement immergé dans le liquide (7) ;
   - la commande de la température de liquide du liquide conformément à un profil de température préréglé au fil du temps en alimentant de façon adéquate (W, R, K) l'élément chauffant sur lequel le récipient de cuisson est placé, en dépendance de la température de liquide mesurée ;
   - l'alimentation (H), en tant que phase de réchauffage fonctionnelle initiale, de l'élément chauffant avec un niveau de puissance de réchauffage préréglé dans une commande en boucle ouverte ou fermée afin de réchauffer le liquide (7) jusqu'à une température préréglée ;
   - la détermination, dans la phase initiale ou une phase fonctionnelle intermédiaire, d'une quantité de liquide contenue dans le récipient de cuisson (6) et l'utilisation de la quantité de liquide ainsi déterminée dans au moins une phase fonctionnelle subséquente (H, W, R, K) en tant qu'un des paramètres pour calculer et régler le niveau de puissance de chauffage de l'élément chauffant ;
   - l'entrée, après la phase de réchauffage, en particulier immédiatement après la phase de réchauffage, dans une phase d'attente de charge, dans laquelle des changements de charge se produisant à l'intérieur du récipient de cuisson sont surveillés et détectés par le dispositif de commande (4) ;
   - lors de la détection d'un changement de charge et/ou lors de la confirmation utilisateur, le transfert automatique de l'ensemble table de cuisson (1) dans une phase de réaction à la charge (R), et le fonctionnement de l'élément chauffant afin de ré-établir la température de cuisson avant le changement de charge ;
   - suivant la phase de réaction à la charge (R), le transfert de l'ensemble table de cuisson (1) à une phase de maintien de mijotage (K) et, l'alimentation de l'élément chauffant afin de suivre un profil de cuisson préréglé.

**2.** Procédé selon la revendication 1, comprenant, par le dispositif de commande (4), l'estimation de la quantité de liquide contenu dans un récipient de cuisson (6) à partir d'un niveau de puissance réel de l'élément chauffant, de la température de liquide mesurée par le capteur de température, d'un taux de changement de la température de liquide, et/ou d'un temps, dans lequel le calcul de la quantité de liquide est optionnellement actif dans une phase initiale, de préférence avec des températures de liquide allant jusqu'à une valeur de seuil de 70°C, ou étant continuées jusqu'à 80°C, dans lequel, lors de l'atteinte de la valeur de seuil, la valeur de quantité de liquide déterminée est optionnellement sauvegardée et utilisée en tant que paramètre de commande dans des phases suivantes ; dans lequel le calcul de la quantité de liquide peut optionnellement commencer lorsqu'un nombre prédéterminé de valeurs de température ont été mesurées après le commencement d'un programme de cuisson choisi.

**3.** Procédé selon la revendication 1 ou 2, comprenant, par le dispositif de commande (4), la mise en fonctionnement de l'élément chauffant de manière telle qu'un résultat de cuisson réglé par ordinateur soit obtenu à un instant réglé par utilisateur ou avant une période réglée par utilisateur.

**4.** Procédé selon au moins l'une des revendications 1 à 3, comprenant, par le dispositif de commande (4), le niveau de puissance de l'élément chauffant avec la température ou le changement de température détecté par l'intermédiaire du capteur de température (5), et en cas de divergence, l'arrêt de l'élément chauffant.

**5.** Procédé selon au moins l'une des revendications 1 à 4, dans lequel, au cas où il est déterminé que la quantité de liquide est inférieure à une valeur de seuil donnée, l'application, par le dispositif de commande (4), d'un niveau de puissance de réchauffage réduit sur l'élément chauffant, dans lequel la quantité de la réduction du niveau de puissance est connexe à une différence du niveau de liquide par rapport à la valeur de seuil.

**6.** Procédé selon l'une quelconque des revendications 1 à 5, comprenant, par le dispositif de commande (4), le calcul de la quantité de liquide à chaque phase fonctionnelle seulement jusqu'à ce que la température de capteur atteigne un seuil prédéterminé, dans lequel le seuil est de préférence 80°C ou 70°C.

**7.** Procédé selon au moins l'une des revendications 1 à 6, comprenant une ou plus d'une des caractéristiques suivantes :

par le dispositif de commande (4), le maintien, dans la phase d'attente de charge, du niveau de température du liquide à l'intérieur du récipient peut être maintenu à la température ou condition préréglée en réglant de façon adéquate le niveau de puissance de l'élément chauffant ;
dans la phase de réaction à la charge, par le dispositif de commande (4), la détermination d'un nouveau niveau de chauffage ou de puissance pour l'élément chauffant qui est approprié et adéquat pour établir le niveau de cuisson cible, en particulier dans des intervalles de temps adéquats ;
par le dispositif de commande (4), la reprise de la phase de maintien de mijotage (K) en réponse à une entrée utilisateur dirigée pou changer le profil de cuisson ou programme de cuisson, dans lequel, lors de la reprise de la phase de maintien de mijotage, par le dispositif de commande (4), le re-calcul du niveau de chauffage et/ou la détermination de la quantité réelle de liquide, dans lequel la reprise de la phase de maintien de mijotage par l'intermédiaire d'une entrée utilisateur est de préférence permise seulement au sein d'un intervalle de temps prédéfini directement après qu'une condition de fin d'une minuterie de cuisson est atteinte ;
par le dispositif de commande (4), l'interruption de la phase de maintien de mijotage en éteignant l'élément chauffant après avoir mis en fonctionnement l'élément chauffant pendant une durée préréglée et selon un profil de temps préréglé dans la phase de maintien de mijotage.

**8.** Procédé selon au moins l'une des revendications 1 à 7, comprenant, par le dispositif de commande (4), la mise en fonctionnement de l'élément chauffant dans un mode à retard de cuisson dans lequel un niveau de cuisson réglé par utilisateur et/ou une température de liquide est obtenu à un instant futur réglé par utilisateur, comprenant, par le dispositif de commande (4), la détermination et le calcul d'un instant d'activation futur pour alimenter l'élément chauffant afin d'obtenir de façon opportune le niveau de cuisson futur réglé par utilisateur, et, dès que l'instant d'activation est atteint, l'activation, par le dispositif de commande (4), de l'élément chauffant pour initier le réchauffage du liquide.

**9.** Procédé selon la revendication 8, comprenant, par le dispositif de commande (4), la détermination, sur la base de la quantité de liquide, d'une énergie, d'un niveau de puissance de chauffage et d'une durée nécessaires pour réchauffer le liquide jusqu'au niveau de cuisson cible souhaité, et l'activation de l'élément chauffant en conséquence pour obtenir le niveau de cuisson cible souhaité à l'instant réglé par utilisateur.

**10.** Procédé selon l'une quelconque des revendications 1 à 9, comprenant, par le dispositif de commande (4), l'exécution d'un étalonnage dans lequel un paramètre fonctionnel de point d'ébullition d'un liquide utilisé pour la cuisson est étalonné selon des valeurs prédominantes à une localisation géographique réelle de fonctionnement de l'ensemble table de cuisson (1), et/ou la réalisation, par le dispositif de commande (4), d'un réglage de température dans au moins l'une des phases de cuisson par rapport à un point d'ébullition de liquide géographique prédominant à, ou représentatif de, la position géographique à laquelle l'ensemble table de cuisson est mis en fonctionnement.

**11.** Dispositif de commande (4) pour commander un ensemble table de cuisson (1) comprenant une zone de cuisson (3), un capteur de température (5), et un élément chauffant, dans lequel le dispositif de commande (4) est configuré et adapté pour exécuter un procédé selon au moins l'une des revendications 1 à 10.

**12.** Dispositif de commande (4) selon la revendication 11, dans lequel le capteur de température (5) est un capteur de type mobile, mobile au moins à l'intérieur d'une section donnée d'un espace de cuisson de l'ensemble table de cuisson (1).

**13.** Ensemble table de cuisson (1) comprenant une zone de cuisson (3) avec un élément chauffant, un dispositif de commande (4), et un capteur de température (5), dans lequel le dispositif de commande (4) est configuré et adapté pour exécuter un procédé selon au moins l'une des revendications 1 à 10.

**14.** Ensemble table de cuisson (1) selon la revendication 13, dans lequel le capteur de température (5) est un capteur de type mobile, mobile au moins à l'intérieur d'une section donnée d'un espace de cuisson de l'ensemble table de cuisson (1).

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3323399 A1
- DE 3535434 A1
- EP 2327939 A1
- DE 10353299 A1
- DE 102010036988 A1